# EUROPÄISCHE PATENTSCHRIFT

(11) **EP 0 754 138 B1**
(45) Veröffentlichungstag und Bekanntmachung des Hinweises auf die Patenterteilung: **31.05.2000**
(21) Anmeldenummer: 95914267.0
(22) Anmeldetag: 16.03.1995
(51) Int. Cl.: B60T 17/02, G05D 16/16

(54) **DRUCKBEGRENZUNGSVENTIL FÜR DRUCKLUFTANLAGEN VON FAHRZEUGEN**
PRESSURE LIMITING VALVE FOR COMPRESSED AIR INSTALLATIONS OF VEHICLES
SOUPAPE DE LIMITATION DE PRESSION POUR INSTALLATIONS A AIR COMPRIME DANS DES VEHICULES

(30) Priorität: 05.04.1994 DE 4411711
(43) Veröffentlichungstag der Anmeldung: 22.01.1997
(73) Patentinhaber: KNORR-BREMSE Systeme für Nutzfahrzeuge GmbH, 80809 München (DE)
(72) Erfinder: UNGER, Hans, D-85716 Unterschlei heim (DE)
(86) Internationale Anmeldenummer: DE9500367
(87) Internationale Veröffentlichungsnummer: WO9526894

(56) Entgegenhaltungen:
- DE-A- 2 949 434
- DE-A- 4 024 487
- DE-A- 4 041 710
- JP-A- 4 077 807

## Beschreibung

Die Erfindung betrifft ein Druckbegrenzungsventil für Druckluftanlagen von Fahrzeugen, insbesondere Straßenfahrzeugen, mit den im Gattungsbegriff des Patentanspruches 1 angegebenen Merkmalen. Ein derartiges Druckbegrenzungsventil hat die Aufgabe, den im Hochdruckteil der Druckluftanlage herrschenden, hohen Druck auf eine niedrigere, zum Speisen des dem Druckbegrenzungsventil nachgeschalteten Niederdruckteils geignete Druckhöhe zu reduziern bzw. zu begrenzen. Tritt im Niederdruckteil ein Druckluftverbrauch auf, so wird aus dem Hochdruckteil Druckluft in den Niederdruckteil zum Ersatz der verbrauchten Druckluft nachgespeist. Dabei können in bekannter Weise zusätzlich Vorrangeinrichtungen vorgesehen sein, welche während erstmaligen oder auch anderweitigen Aufladevorgängen beider Druckteile unterschiedlicher Druckhöhe ein bevorzugtes Aufladen bzw. Speisen eines Druckteiles mit der vom Kompressor geförderten Druckluft bewirken.

Ein derartiges Druckbegrenzungsventil ist bekannt aus der DE-OS 40 41 710. Dieses Druckbegrenzungsventil ist nur in Verbindung mit einer Druckregeleinrichtung, umfassend eine Governorventileinrichtung und eine von dieser schaltbare Abschalteinrichtung mit einem Auslaßventil für die vom Kompressor in dessen Leerlaufphasen geförderte Luft, verwendbar und muß auf den Schaltdruck der Governorventileinrichtung abgestimmt sein. Der Steuerkolben des bekannten Druckbegrenzungsventils schaltet unmittelbar das Durchgangsventil; als Einrichtung zum Vermeiden von in der genannten Druckschrift ausführlich mitsamt den hierduch bedingten Mängeln behandelten, schleichenden Schaltvorgängen des Durchgangsventils ist der Schaltkolben oder ein Ventilteil des Durchgangsventils mit einer zusätzlichen Kolbenfläche versehen, die durch eine besondere Steuerleitung von einem Steuerdruck beaufschlagbar ist, welcher wie allgemein bekannt von der Governorventileinrichtung zum Schalten der Abschalteinrichtung erstellt wird.

Die bauliche und funktionelle Abhängigkeit des bekannten Druckbegrenzungsventils von der Governorventileinrichtung und insbesondere deren Schaltwerten erschwert und begrenzt die Einsetzbarkeit dieses Druckbegrenzungsventils, ganz besonders dann, wenn in einer Druckluftanlage mehr als zwei unterschiedliche Betriebsdrücke, wie beispielsweise 12 bar für eine Luftfederung, 10 bar für eine Motorwagenbremsanlage und 8 bar für eine Anhängerbremsanlage, erforderlich sind. Die von der Governorventileinrichtung zum bekannten Druckbegrenzungsventil erforderliche Steuerleitung erschwert und verteuert den Einbau.

Aus der DE-OS 29 49 434 ist eine baulich zu einem Druckregler kombinierte Governorventileinrichtung und Abschalteinrichtung bekannt. Der Governorteil weist hierbei einen Steuerkolben auf, der einerseits von einer in einem Atmosphärendruck führenden Raum angeordneten, justierbaren Regelfeder und andererseits vom in einem Beaufschlagungsraum herrschenden, über ein Rückschlagventil abgesicherten, geregelten Ausgangsdruck beaufschlagt ist. Der Steuerkolben ist als Ringkolben ausgebildet, der abgedichtet verschieblich von einem Ventilrohr durchsetzt ist und eine in diesem befindliche und zu dessen Innenbohrung führende Querbohrung zu überschleifen vermag. Das Ventilrohr durchbricht abgedichtet verschieblich eine Gehäusetrennwand, die den genannten Beaufschlagungsraum von einem zweiten, einen Schaltkolben des Abschaltteiles in Öffnungsrichtung dessen Auslaßventils belastenden Beaufschlagungsraum trennt; die Innenbohrung des Ventilrohres mündet in diesen zweiten Beaufschlagungsraum. Der Steuerkolben, das Ventilrohr und der Schaltkolben sind zueinander gleichachsig angeordnet.

Es ist Aufgabe der Erfindung, mit einfachen und bewährten Mitteln ein Druckbegrenzungsventil der eingangs erläuterten Art zu schaffen, welches konstruktiv und funktionell unabhängig von Governorventil- oder Druckreglereinrichtungen oder dergleichen ist, demgemäß ohne besondere Steuerleitungen zu benötigen einfach und billig einbau- und montierbar und allgemein einsetzbar ist und welches in einfacher Weise auf zu begrenzende Druckwerte justierbar ist, so daß es auch in Druckluftanlagen mit mehr als zwei unterschiedliche Druckhöhen aufweisenden Druckteilen in Mehrfachanordnung einsetzbar ist.

Diese Aufgabe wird nach der Erfindung durch eine Ausbildung des Druckbegrenzungsventils gemäß den im kennzeichnenden Teil des Patentanspruches 1 genannten Merkmalen gelöst, welche zudem ein schnelles, völliges Durchschalten des Druckbegrenzungsventils fördern. In den Unteransprüchen sind nach der Erfindung vorteilhafte, weitere Ausbildungsmöglichkeiten für ein derartiges Druckbegrenzungsventil aufgezeigt. Die Merkmale nach Unteranspruch 4 erlauben, die Druckdifferenz des begrenzten Druckes zwischen den ein öffnen bzw. ein Schließen des Durchgangsventils bewirkenden Druckhöhen besonders gering, z.B. in der Größenordnung von ca 0,3 bar, zu gestalten.

In der Zeichnung sind zwei bevorzugte Ausführunsbeispiele von nach der Erfindung ausgestalteten Druckbegrenzungsventilen in schematischen Schnittbildern dargestellt, und zwar zeigt
- Fig.1: ein erstes Ausführungsbeispiel in einer ersten und
- Fig.2: in einer zweiten Schaltstellung, sowie
- Fig.3: ein zweites Ausführungsbeispiel in der ersten und
- Fig.4: in der zweiten Schaltstellung,
wobei die Fig. 1 und 2 einen etwas größeren Maßstab aufweisen als die Fig. 3 und 4; gleiche Bezugszahlen beziehen sich in allen Figuren auf gleiche oder einander entsprechende Teile.

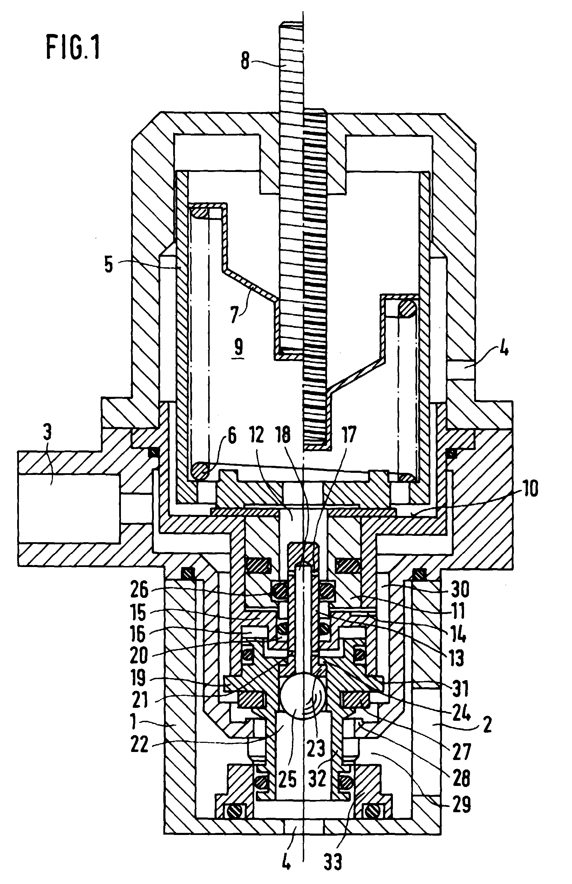

Das Druckbegrenzungsventil nach weist nach Fig.1 in einem Gehäuse 1 einen Rohranschluß 2 zum Anschluß eines Hochdruckteiles einer nicht dargestellten Druckluftanlage auf; dieser Hochdruckteil wird Über einen ebenfalls nicht dargestellten Kompressor Über die üblichen Regel- und Schalteinrichtungen mit Druckluft versorgt. Ein weiterer Rohranschluß 3 des Gehäuses 1 ist an einen Niederdruckteil der Druckluftanlage zu dessen Druckluftversorgung aus dem Hochdruckteil mit in ihrer Druckhöhe auf einen niedrigeren Wert begrenzter Druckluft anzuschließen. Die zwei Öffnungen 4 des Gehäuses 1 sind Entlüftungen zur Atmosphäre.

Im Gehäuse 1 ist ein Federtopf 5 axialverschieblich geführt, in welchem sich eine mit ihrem unteren Ende auf diesem Federtopf 5 aufstehende Regelfeder 6 befindet. Das obere Ende der Regelfeder 6 ist vermittels eines Federtellers 7 und einer Einstellschraube 8 Justierbar gegen das Gehäuse 1 abgestützt; in der linken Hälfte der Fig.1 ist die Regelfeder 6 weitgehend entspannt, in der rechten Hälfte weitgehend gespannt dargestellt. Die den Federtopf 5 und die Regelfeder 6 aufnehmende Kammer 9 des Gehäuses 1 ist über eine der Öffnungen 4 entlüftet. Der Federtopf 5 liegt mit einer Ringfläche abhebbar auf einer Flanschfläche 10 des Gehäuses 1 auf.

Radial innerhalb der Ringfläche liegt am Federtopf 5 von unten die Oberseite eines Steuerkolbens 11 an, der im Gehäuse 1 abgedichtet verschieblich geführt ist. Der Steuerkolben 11 ist als Ringkolben ausgestaltet, in seine Innenbohrung 12 greift ein Ventilrohr 13 ein. Unterhalb des Steuerkolbens 11 befindet sich im Gehäuse 1 ein Beaufschlagungsraum 14, der durch eine gehäusefeste Trennwand 15 von einem weiteren, anschließenden Beaufschlagungsraum 16 abgetrennt ist. Das axial obere, in der Innenbohrung 12 befindliche Ende des Ventilrohrs 13 ist verschlossen. Nahe dieses verschlossenen Endes ist das Ventilrohr 13 mit Querbohrungen 17 versehen, die seine Wandung durchbrechen und in seine Innenbohrung 18 münden.

Der Beaufschlagungsraum 16 ist gegenüberliegend zur Trennwand 15 von einem ebenfalls als Ringkolben ausgebildeten Schaltkolben 19 begrenzt, der im Gehause 1 abgedichtet verschieblich geführt ist. Der Federtopf 5, der Steuerkolben 11, das Ventilrohr 13 und der Schaltkolben 19 sind zueinander gleichachsig angeordnet. Die Trennwand 15 ist von einer Verbindungsbohrung 20 durchbrochen, in welcher das Ventilrohr 13 abgedichtet verschieblich geführt ist. Das Ventilrohr 13 durchragt den Beaufschlagungsraum 16, innerhalb dessen sie zweite, in seine Innenbohrung 18 mündende Querbohrungen 21 aufweist, und endet innerhalb der Innenbohrung 22 des Schaltkolbens 19 mit einem Außenringflansch 23 unterhalb eines nahe des oberen Endes der Innenbohrung 22 befindlichen Innenflansches 24 des Schaltkolbens 19. Unterhalb des Außenringflansches 23 ist in die Innenbohrung 22 als Stopfen eine Verschlußkugel 25 eingepreßt, derart, daß der Außenringflansch 23 zwischen dieser Verschlußkugel 25 und dem Innenringflansch 24 spielfrei eingespannt ist, wobei die Verschlußkugel 25 zugleich die Innenbohrung 18 nach unten verschließt.

Der Steuerkolben 11 weist in seiner Innenbohrung 12 einen Dichtring 26 auf, an welchem das Ventilrohr 13 abgedichtet verschieblich ist; in der in Fig.1 gezeigten Offen- bzw. Speisestellung des Druckbegrenzungsventils, bei in tiefster Stellung befindlichem Steuerkolben 11 und in höchster Stellung befindlichem Ventilrohr 13, befinden sich die Querbohrungen 17 mit etwas Abstand oberhalb des Dichtringes 26, beim Hochdrücken des Steuerkolbens 11 werden sie vom Dichtring 26 überschliffen, so daß ihre Verbindung zur Kammer 9 unterbrochen wird und sie in Verbindung zum Beaufschlagungsraum 14 gelangen. Der Dichtring 26 bildet also zusammen mit dem Ventilrohr 13 ein Rundschieberventil.

Der Schaltkolben 19 trägt an seiner Unterseite einen Ventildichtring 27, dem nach Fig.1 mit Abstand ein gehäusefester Ventilsitz 28 gegenübersteht; der Ventildiichtring 27 bildet zusammen mit dem Ventilsitz 28 ein Durchgangsventil 27,28, welches eine Verbindung von einem mit dem Rohranschluß 2 verbundenen Raum 29 zu einem mit dem Rohranschluß 3 und dem Beaufschlagungsraum 14 verbundenen Raum 30 überwacht. In der in Fig.1 gezeigten, höchsten Stellung des Schaltkolbens 19 mit geöffnetem Durchgangsventil 27,28 liegt der Schaltkolben 19 mittels eines Anschlages 31 am Gehäuse 1 an, welcher seinen Ansteigehub begrenzt. Der Ventilsitz 28 ist mit weitem Spiel von einem Rohransatz 32 des Schaltkolbens 19 durchragt, der an seinem Außenzylinder mit einem zumindest annähernd dem Ventilsitz 28 entsprechendem Durchmesser dicht an einem in den Raum 29 ragenden, rohrstutzenartigen und in seinem Innenraum mit einer Öffnung 4 verbundenen Ansatz 33 des Gehäuses 1 verschieblich geführt ist; das Durchgangsventil 27,28 ist hierdurch zumindest nahezu druckentlastet.

Während des Aufladens bzw. Nachspeisens des Niederdruckteiles der Druckluftanlage nehmen die Teile des Druckbegrenzungsventils die aus Fig.1 ersichlichen Lagen ein: Der im Niederdruckteil und damit im Beaufschlagungsraum 14 herrschende Druck reicht nicht aus, den Steuerkolben 11 gegen die Kraft der Regelfeder 6 anzuheben,der Federtopf 5 liegt daher auf der Flanschfläche 10 bei an ihm von unten anliegendem Steuerkolben 11 auf. Durch die Querbohrungen 17, die Innenbohrung 18 und die Querbohrungen 21 ist der Beaufschlagungsraum 16 zur Atmosphäre entlüftet, der Schaltkolben 19 befindet sich bei geschlossenem Anschlag 31 in seiner höchsten Stellung. Das Durchgangsventil 27,28 ist geöffnet und Druckluft kann vom Anschluß 2 zum Anschluß 3 strömen.

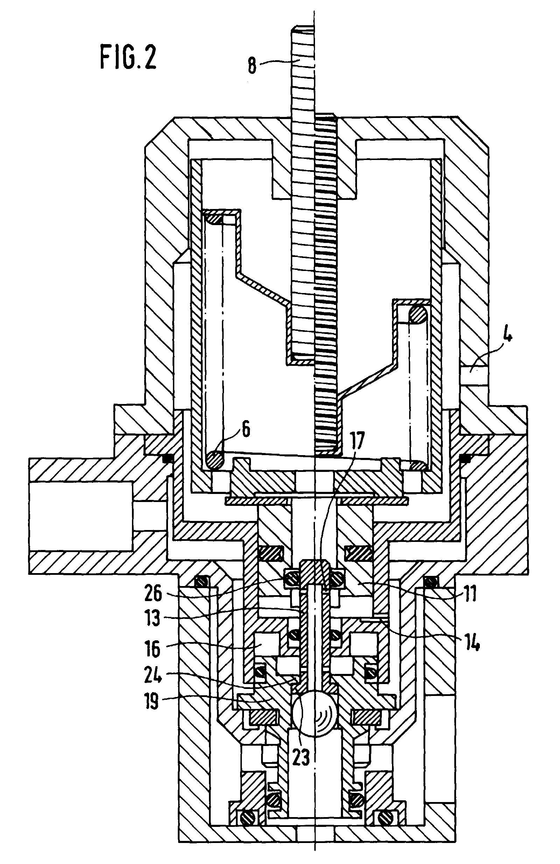

Sobald im Niederdruckteil die Schließdruckhöhe des Druckbegrenzungsventils erreicht ist, welche durch eine entsprechende Justierung der Einstellschraube 8 und damit Einstellung der Vorspannung der Regelfeder 6 innerhalb des aus dem linken und dem rechten Teilbild der Fig.1 ersichtlichen Bereiches vorbestimmbar ist, hebt sich der Steuerkolben 11 unter Mitnahme des Federtopf es 5 unter seiner Druckbeaufschlagung an, wobei alsbald der Dichtring 26 die Querbohrungen 17 des bis dahin ortsfest verbleibenden Ventilrohres 13 überschleift. Der Aufwärtshub des Steuerkolbens 11 kann höchstens bis zum Anschlagen des oberen Randes des Federtopfes am Gehäuse 1 erfolgen. Der Beaufschlagungsraum 16 wird damit von der Atmosphäre abgetrennt und durch die Innenbohrung 18 mit dem im Niederdruckteil herrschenden Druck beaufschlagt, wodurch der Schaltkolben 19 sofort und rasch nach unten bis zum Aufsetzen des Ventildichtungsringes 27 auf den Ventilsitz 28 und damit zum Schließen des Durchgangsventils 27,28 abwärts bewegt wird. Der Schaltkolben 19 nimmt dabei in Art einer Verstärkung der Schaltbewegung für das aus dem Dichtring 26 und dem Ventilrohr 13 bestehende Schieberventil das Ventilrohr 13 mit, wodurch dessen Querbohrungen 17, die bis dahin eventuell noch teilweise vom Dichtring 26, allerdings undicht, überdedckt sein können, nach unten vom Dichtring 26 jedenfalls völlig freikommen und eine ebenso jedenfalls ungedrosselte Druckbeaufschlagung des Beaufschlagungsraumes 16 und völlige Abwärtsbewegung des Schaltkolbens 19 mit dichtem Schließen des Durchgangsventils 27,28 sicherstellen: Der Schaltvorgang des Druckbegrenzungsventils erfolgt damit rasch und vollständig und die Drucklufteinspeisung in den Niederdruckteil wird beendet. Damit ist der in Fig.2 dargestellte Schaltzustand des Druckbegrenzungsventils erreicht.

Sobald die im Niederdruckteil herrschende Druckhöhe insbesondere durch Druckluftverbrauch unter eine Einschaltdruckhöhe absinkt, welche um einen Differenzwert niedriger als die Schließdruckhöhe ist, drückt die Regelfeder 5 den Steuerkolben 11 soweit abwärts, daß der Dichtring 26 die nunmehr infolge der vorbeschriebenen Abwärtsbewegung des Schaltkolbens 19 mit Ventilrohr 13 sich in einer tieferen Lage befindlichen Querbohrungen 17 wieder überschleift, der Beaufschlagungsraum 16 wird daher in die Atmoshäre entlüftet. Der vorerwähnte Differenzwert ist durch die Kraftdifferenz der Regelfeder 6 in deren den unterschiedlichen Höhenlagen der Querbohrungen 17 bei geschlossenem und geöffnetem Durchgangsventil 27,28 entsprechenden Kompressionszuständen bestimmt. Infolge der Enlüftung des Beaufschlagungsraumes 16 hebt sich der Schaltkolben 19 unter Öffnen des Durchgangventils 27,28 an, er nimmt dabei das Ventilrohr 13 nach oben mit, so daß es aus dem Bereich des Dichringes 26 gelangt; der Schaltvorgang des wie vorstehend bereits erwähnt gebildeten Schieberventils wird hierdurch verstärkt und der Schaltvorgang des Druckbegrenzungsventils erfolgt entsprechend umgekehrt zum vobeschriebenen Schließvorgang rasch und vollständig. Alle Teile des Druckbegrenzungsventils gelangen dabei in die in Fig.1 dargestellten Lagen zurück. Die Aufwärtsbewegung des Schaltkolbens 19 wird durch die Durchmesserdifferenz zwischen seiner Führung am Gehäuse 1 und dem Durchmesser des Durchgangsventils 27,28, deren Fläche vom Druck im Raum 30 belastet ist, bewirkt; zusätzlich kann sie durch die Kraft einer nicht dargestellten Ruckführfeder oder durch pneumatische Belastung infolge konstruktiv bestimmter, nur teilweiser Entlastung des Durchgangsventils 27,28 durch einen gegenüber dem Dichtdurchmesser des Durchgangsventils 27,28 geringfügig kleiner gewählten Dichtungsdurchmesser des Rohransatzes 32 unterstützt werden.

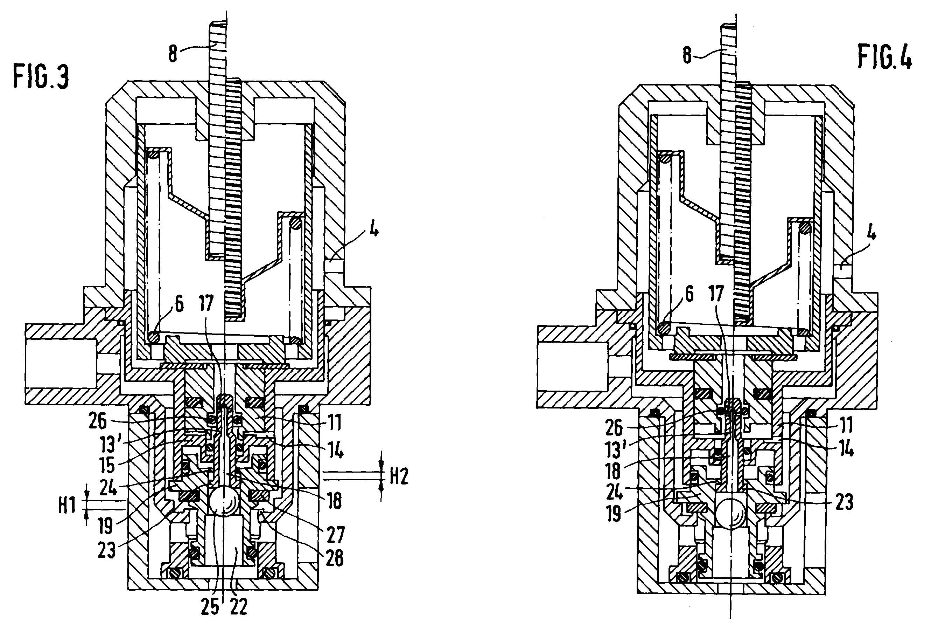

Bei der Ausführung des Druckbegrenzungsventils nach Fig.3 und 4 ist in Fig.3, welche das Druckbegrenzungsventil in seiner der Fig.1, entsprechenden Schaltstellung zeigt, der Öffnungshub H1 des Durchgangsventils 27,28 eingezeichnet. Das Ventilrohr 13' ist innerhalb des Beaufschlagungsraumes 14 mit einer Abstufung seines Außendurchmessers versehen, derart, daß es mit einem Abschnitt kleineren Außendurchmessers den Dichtring 26 und mit einem Abschnitt größeren Außendurchmessers die Trennwand 15 durchsetzt. Die Verschlußkugel 25 ist derart in die Innenbohrung 22 dicht eingepreßt, daß der Außenringflansch 23 ein Bewegungsspiel zwischender Verschlußkugel 25 und dem Innenringflansch 24 von der in Fig.3 eingezeichneten Größe H2 aufweist: Das Ventilrohr 13' ist also relativ zum Schaltkolben um den Hubweg H2 verschieblich. Der Öffnungshub H1 ist etwas größer als der Hubweg H2 bemessen. Im übrigen entspricht das Druckbegrenzungsventil nach den Fig.3 und 4 vollständig demjenigen nach den Fig. 1 und 2.

Durch die Durchmesserabstufung des Ventilrohres 13' wird erreicht, daß infolge der pneumatischen Belastung der Abstufungsringfläche vom Druck im Beaufschlagungsraum 14 das Ventilrohr 13' sich in der Schaltstellung nach Fig.3 relativ zum in seiner oberen Stellung befindlichem Schaltkolben 19 in seiner unteren, auf der Verschlußkugel 25 aufliegenden Stellung befindet. In der Schaltstellung nach Fig.4, welche derjenigen nach Fig.2 entspricht, wird das Ventilrohr 13' durch die Druckluftbeaufschlagung seiner Innenbohrung 18 bei zum Schließen des Durchgangsventils 27,28 um den Öffnungshub H1 abgesenkten Schaltkolben relativ zu diesem um den Hubweg H2 bis zur Anlage seines Außenringflansches 23 am Innenringflansch 24 angehoben: Im Vergleich zur Ausführung nach den Fig.1 und 2 gelangen hierdurch die Querbohrungen 17 in eine dem Dichtring 26 wesentlich nähere Lage unterhalb desselben, so daß der Steuerkolben 11 sie nachfolgend bereits bei einer entsprechend wesentlich geringeren Absenkung, welcher eine entsprechend verminderte Druckabsenkung im Niederdruckteil entspricht, überschleift. Hierdurch wird erreicht, daß der Differenzwert zwischen Einschaltdruckhöhe und Schließdruckhöhe, also die Schaltspanne zwischen dem Öffnen und Schließen des Druckbegrenzungsventils, sehr gering, z.B. in der Größenordnung von ca 0,3 bar, festlegbar ist. Im übrigen entspricht die Funktionsweise dieses Druckbegrenzungsventils der zu Fig.1 und 2 beschriebenen und bedarf daher keiner weitern Erläuterungen.

Zusammenfassend kann gesagt werden:
Das Druckbegrenzungsventil für Kreise unterschiedlicher Druckhöhe aufweisende Druckluftanlagen von Fahrzeugen weist zur Steuerung seines Durchgangsventils (27,28) ein integriertes Vorsteuerventil auf. Hierdurch wird erreicht, daß das Druckbegrenzungsventil unabhängig von anderen Ventileinrichtungen einsetz- und einstellbar ist.

Die beiden Ventile des Druckbegrenzungsventils sind derart verkoppelt, daß die Schaltbewegungen des Vorsteuerventils durch die Schaltbewegungen des Durchgangsventils (27,28) verstärkt werden.

| Aufstellung der Bezugszeichen. | | | |
|---|---|---|---|
| 1 | Gehäuse | 2 | Rohranschluß |
| 3 | Rohranschluß | 4 | Öffnung |
| 5 | Federtopf | 6 | Regelfeder |
| 7 | Federteller | 8 | Einstellschraube |
| 9 | Kammer | 10 | Flanschfläche |
| 11 | Steuerkolben | 12 | Innenbohrung |
| 13 | Ventilrohr | 13' | Ventilrohr |
| 14 | Beaufschlagungsraum | 15 | Trennwand |
| 16 | Beaufschlagungsraum | 17 | Querbohrung |
| 18 | Innenbohrung | 19 | Schaltkolben |
| 20 | Verbindungsbohrung | 21 | Querbohrung |
| 22 | Innenbohrung | 23 | Außenringflansch |
| 24 | Innenringflansch | 25 | Verschlußkugel |
| 26 | Dichtring | 27 | Ventildichtring |
| 28 | Ventilsitz | 27,28 | Durchgangsventil |
| 29 | Raum | 30 | Raum |
| 31 | Anschlag | 32 | Rohransatz |
| 33 | Ansatz | | |
| H1 | Öffnungshub | H2 | Hubweg |

## Patentansprüche

1. Druckbegrenzungsventil für Druckluftanlagen von Fahrzeugen, insbesondere Straßenfahrzeugen, wobei die Druckluftanlagen einen von einem Kompressor gegebenenfalls über eine Druckregeleinrichtung aufladbaren Hochdruckteil und einen aus diesem durch das Druckbegrenzungsventil aufladbaren Niederdruckteil aufweisen und wobei das Druckbegrenzungsventil mit einen vom Druck im Niederdruckteil entgegen der Kraft einer gegebenenfalls justierbaren, in einer Athmosphärendruck führenden Kammer (9) angeordneten Regelfeder (6) beaufschlagten Steuerkolben (11) zum Überwachen des Schaltens eines in eine Verbindung von einem an den Hochdruckteil angeschlossenen Rohranschluß (2) zu einem an den Niederdruckteil angeschlossenen Rohranschluß (3) eingeordneten Durchgangsventils (27,28) sowie mit einer Einrichtung zum Vermeiden schleichender Schaltvorgänge des Durchgangsventils ausgestattet ist,
dadurch gekennzeichnet,
daß im Druckbegrenzungsventil ein vom Steuerkolben (11) schaltbares Vorsteuerventil vorgesehen ist, welches die Druckluftbeaufschlagung eines Schaltkolbens (19) steuert, welcher seinerseits das Durchgangsventil (27,28) betätigt, und daß das Vorsteuerventil mit dem Schaltkolben (19) gekoppelt ist, wozu das Vorsteuerventil als ein Rundschieberventil ausgebildet ist, dessen eines Schieberteil mit dem Steuerkolben (11) und dessen anderes Schieberteil mit dem Schaltkolben (19) gekoppelt ist, wobei der Steuerkolben (11), der Schaltkolben (19) und das Rundschieberventil gleichachsig zueinander angeordnet sind.

2. Druckbegrenzungsventil nach Anspruch 1, dadurch gekennzeichnet, daß der Steuerkolben (11) ein Ringkolben ist, der innenseitig einen Dichtring (26) als das mit ihm gekoppelte, eine Schieberteil aufweist, und daß der Dichtring (26) von einem gegen ihn dicht verschieblichen Ventilrohr (13) als anderes Schieberteil durchgriffen ist, wobei das Ventilrohr (13) eine seine Wandung durchsetzende, vom Dichtring (26) überschleifbare Querbohrung (17) zu seiner Innenbohrung (18) aufweist und die Innenbohrung (18) mit einem Beaufschlagungsraum (16) des Schaltkolbens (19) in Verbindung steht.

3. Druckbegrenzungsventil nach Anspruch 2, dadurch gekennzeichnet, daß ein vom Druck des Niederdruckteils beaufschlagter Beaufschlagungsraum (14) für den Steuerkolben (11) und der mit der Innenbohrung (18) des Ventilrohres (13) in Verbindung stehende Beaufschlagungsraum (16) zwischen dem Steuer- und dem Schaltkolben (11;19) einander benachbart angeordnet sind, wobei das Ventilrohr (13) eine Verbindungsbohrung (20) in einer gehäusefesten Trennwand (15) zwischen beiden Beaufschlagungsräumen (14;16) abgedichtet verschieblich durchsetzt.

4. Druckbegrenzungsventil nach einem oder mehreren der Ansprüche 1 bis 3, dadurch gekennzeichnet, daß das mit dem Schaltkolben (19) gekoppelte Schieberteil (13') um einen Hubweg (H2) relativ zu diesem Schaltkolben (19) beweglich ist, der kleiner als der Schalthub (H1) des Durchgangsventils (27,29) ist, und daß es eine es entgegengesetzt zu den Bewegungen des Schaltkolbens (19) relativ zu diesem verschiebende Bewegungsteuerung aufweist.

5. Druckbegrenzungsventil nach den Ansprüchen 3 und 4, dadurch gekennzeichnet, daß das Ventilrohr (13') innerhalb des Beaufschlagungsraumes (14) für den Steuerkolben (11) eine Abstufung seines Außendurchmessers aufweist, derart, daß es mit einem Abschnitt kleineren Außendurchmessers den im Steuerkolben (11) gehalterten Dichtring (26) und mit einem Abschnitt größeren Außendurchmessers die Trennwand (15) durchsetzt.

6. Druckbegrenzungsventil nach einem oder mehreren der vorstehenden Ansprüche, dadurch gekennzeichnet, daß das Durchgangsventil (27,28) als Sitzventil mit einem am Schaltkolben (19) gegenüberliegend zu dessen Beaufschlagungsraum (16) angeordnetem Ventilteil (27) ausgebildet ist, das durch einen das andere, gehäusefeste Ventilteil (28) mit Radialspiel durchsetzenden, am Gehäuse (1) abgedichtet verschieblich geführten Rohransatz (32) des Schaltkolbens (19) zumindest teilentlastet ausgebildet ist.

7. Druckbegrenzungsventil nach Anspruch 3 oder 4, dadurch gekennzeichnet, daß der Schaltkolben (19) als Ringkolben ausgebildet ist, in dessen Innenbohrung (22) das Ventilrohr (13;13') mit einem einen Innenringflansch (24) des Schaltkolbens (19) hintergreifenden Außenringflansch (23) endet, und daß die Innenbohrung (22) durch einen Stopfen, gegebenenfalls eine eingepreßte Verschlußkugel (25), verschlossen ist, die den Außenringflansch (23) bei dessen Anlage am Innenringflansch (24) entweder zumindest annähernd spielfrei oder bei Ausbildung nach Anspruch 4 mit einem der Relativbeweglichkeit zwischen dem Schaltkolben (19) und dem Ventilrohr (13') entsprechendem Spiel (H2) hintergreift.

## Claims

1. Pressure-limiting valve for compressed-air systems of vehicles, in particular road vehicles, the compressed air systems having a high-pressure portion which can be charged by a compressor, optionally by way of a pressure-regulating device, and a low-pressure portion which can be charged from this high-pressure portion via the pressure-limiting valve, and where the pressure-limiting valve is equipped with a control piston (11) acted on by the pressure in the low-pressure portion against the force of an optionally adjustable governing spring (6) arranged in a chamber (9) conveying atmospheric pressure, for monitoring the switching of a two-way valve (27, 28) introduced into a connection portion from a pipe terminal (2) connected to the high-pressure portion, to a pipe terminal (3) connected to the low-pressure portion, and a device for avoiding slow switching events of the two-way valve,
characterised in that
in the pressure-limiting valve there is provided a pilot valve which can be switched by the control piston (11) and controls the compressed-air application to a switching piston (19), which in turn actuates the two-way valve (27, 28), and in that the pilot valve is coupled to the switching piston (19), for which purpose the pilot valve is constructed as a circular slide valve, one slide portion of which is coupled to the control piston (11) and the other slide portion of which is coupled to the switching piston (19), the control piston (11), the switching piston (19) and the circular slide valve being arranged on the same axis as each other.

2. Pressure-limiting valve according to claim 1, characterised in that the control piston (11) is an annular piston which has on its inside a sealing ring (26) coupled to it as the slide portion, and in that the sealing ring (26) is penetrated by a valve tube (13), movable closely against it, as the other slide portion, the valve tube (13) having a transverse bore (17) passing through its wall, over which the sealing ring (26) can be slipped, to its interior bore (18), and the interior bore (18) is in connection with a pressure chamber (16) of the switching piston (19).

3. Pressure-limiting valve according to claim 2, characterised in that a pressure chamber (14) for the control piston (11), acted on by the pressure of the low-pressure portion, and the pressure chamber (16) in connection with the interior bore (18) of the valve tube (13) are arranged adjacently to each other between the control piston and the switching piston (11; 19), the valve tube (13) passing displaceably in a sealed manner through a connection bore (20) in a dividing wall (15) fixed to the housing, between the two pressure chambers (14; 16).

4. Pressure-limiting valve according to one or more of claims 1 to 3, characterised in that the slide portion (13') coupled to the switching piston (19) is movable relatively to this switching piston (19) by a stroke (H2) which is shorter than the length of stroke (H1) of the two-way valve (27, 29), and in that it has a movement control device sliding in the opposite direction to the movements of the switching piston (19) and relatively to this piston.

5. Pressure-limiting valve according to claims 3 and 4, characterised in that inside the pressure chamber (14) for the control piston (11) the valve tube (13') has a gradation of its outer diameter such that it passes through the sealing ring (26), mounted in the control piston (11), with a section of smaller outer diameter, and through the dividing wall (15) with a section of larger outer diameter.

6. Pressure-limiting valve according to one or more of the preceding claims, characterised in that the two-way valve (27, 28) is constructed as a seat valve with a valve portion (27) arranged on the switching piston (19) opposite its pressure chamber (16), the valve portion being constructed, at least with partial load-relief, by a tubular extension (32) of the switching piston (19) guided movably under seal on the housing (1) and passing, with radial clearance, through the other valve portion (28) fixed to the housing (1).

7. Pressure-limiting valve according to claim 3 or 4, characterised in that the switching piston (19) is constructed as an annular piston, in the interior bore (22) of which the valve tube (13; 13') ends with an outer ring flange (23) engaging behind an inner ring flange (24) of the switching piston (19), and in that the interior bore (22) is sealed by a stopper, possibly a pressed-in closure ball (25), which engages behind the outer ring flange (23) when the latter abuts the inner ring flange (24) either at least more or less clearance-free or, when it is constructed according to claim 4, with a clearance (H2) corresponding to the relative movability between the switching piston (19) and the valve tube (13').

## Revendications

1. Soupape de limitation de pression pour des installations à air comprimé de véhicules, notamment de véhicules routiers, les installations à air comprimé comprenant une partie haute pression qui peut être mise en charge par un compresseur, éventuellement par l'intermédiaire d'un dispositif de régulation de pression, et une partie basse pression qui peut être mise en charge à partir de cette dernière, à travers la soupape de limitation de pression, et la soupape de limitation de pression étant équipée d'un piston de commande (11) chargé par la pression régnant dans la partie basse pression, à l'encontre de la force d'un ressort de régulation (6) qui peut être éventuellement ajusté et qui est disposé dans une chambre (9) placée à la pression atmosphérique, pour le contrôle de la commutation d'une soupape droite (27,28) insérée dans une jonction d'un raccord tubulaire (2), raccordé à la partie haute pression, à un raccord tubulaire (3) raccordé à la partie basse pression, ainsi que d'un dispositif servant à éviter des processus de commutation lents de la soupape droite,
caractérisée en ce
que dans la soupape de limitation de pression, il est prévu une soupape de commande pilote, qui peut être commutée par le piston de commande (11) et qui commande la charge par l'air comprimé d'un piston de commutation (19) qui, pour sa part, actionne la soupape droite (27,28), et en ce que la soupape de commande pilote est couplée au piston de commutation (19), et à cet effet la soupape de commande pilote est agencée sous la forme d'une soupape à tiroir cylindrique, dont une partie du tiroir est couplée au piston de commande (11) et dont l'autre partie du tiroir est couplée au piston de commutation (19), le piston de commande (11), le piston de commutation (19) et la soupape à tiroir cylindrique étant disposés coaxialement entre eux.

2. Soupape de limitation de pression selon la revendication 1, caractérisée en ce que le piston de commande (11) est un piston annulaire, qui comporte, sur son côté intérieur, une bague d'étanchéité (26) constituant la partie du tiroir qui est couplée à ce piston, et en ce que la bague d'étanchéité (26) est traversée par un tube de soupape (13) déplaçable d'une manière étanche contre elle et constituant l'autre partie du tiroir, le tube de soupape (13) comportant un perçage transversal (17), qui traverse sa paroi jusqu'à son perçage intérieur (18) et qui peut être recouvert par la bague d'étanchéité (26), et le perçage intérieur (18) étant relié à une chambre de charge (16) du piston de commutation (19).

3. Soupape de limitation de pression selon la revendication 2, caractérisée en ce qu'une chambre de charge (14) pour le piston de commande (11), chargée par la pression de la partie basse pression, et la chambre de charge (16), qui est reliée au perçage intérieur (18) du tube de soupape (13), sont disposées au voisinage l'une de l'autre entre le piston de commande et le piston de commutation (11;19), le tube de soupape (13) traversant par coulissement étanche un perçage de liaison (20) formé dans une paroi de séparation (15) solidaire du boîtier, entre les deux chambres de charge (14;16).

4. Soupape de limitation de pression selon une ou plusieurs des revendications 1 à 3, caractérisée en ce que la partie (13') du tiroir, qui est couplée au piston de commutation (19), est déplaçable par rapport à ce piston de commutation (19), sur une course de levée (H2) qui est inférieure à la course de commutation (H1) de la soupape droite (27,28), et en ce qu'elle comporte une unité de commande de déplacement qui coulisse par rapport au piston de commutation (19), en sens opposé aux déplacements de ce dernier.

5. Soupape de limitation de pression selon les revendications 3 et 4, caractérisée en ce que le tube de soupape (13') comporte un gradin formé sur sa périphérie extérieure, à l'intérieur de la chambre de charge (14) pour le piston de commande (11), de telle sorte qu'il traverse par un tronçon de diamètre extérieur réduit, la bague d'étanchéité (26) retenue dans le piston de commande (11), et traverse, par un tronçon de diamètre extérieur accru, la paroi de séparation (15).

6. Soupape de limitation de pression selon une ou plusieurs des revendications précédentes, caractérisée en ce que la soupape droite (27,28) est agencée sous la forme d'une soupape à siège comportant une partie de soupape (27) qui est disposée sur le piston de commutation (19), à l'opposé de la chambre de charge (16) de ce dernier, et qui est formée de manière à être au moins partiellement détendue, au moyen d'un embout tubulaire (32) du piston de commutation (19), qui traverse l'autre partie de soupape (28) solidaire du boîtier, avec un jeu radial, et est guidé à coulissement et d'une manière étanche sur le boîtier (1).

7. Soupape de limitation de pression selon la revendication 3 ou 4, caractérisée en ce que le piston de commutation (19) est agencé sous la forme d'un piston annulaire, dans le perçage intérieur (22) duquel le tube de soupape (13;13') se termine par un rebord annulaire extérieur (23), qui s'engage derrière un rebord annulaire intérieur (24) du piston de commutation (19), et en ce que le perçage intérieur (22) est fermé par un bouchon, éventuellement une bille de fermeture (25) insérée à force, qui s'engage derrière le rebord annulaire extérieur (23), lors de l'application de ce dernier contre le rebord annulaire intérieur (24), soit au moins approximativement sans jeu, soit, dans le cas de la réalisation selon la revendication 4, avec un jeu (H2) qui correspond à la mobilité relative entre le piston de commutation (19) et le tube de soupape (13').
